# EUROPÄISCHE PATENTSCHRIFT

(11) **EP 1 275 547 B1**
(45) Veröffentlichungstag und Bekanntmachung des Hinweises auf die Patenterteilung: **19.08.2009**
(21) Anmeldenummer: 02011700.8
(22) Anmeldetag: 04.06.2002
(51) Int. Cl.: B60K 6/445, B60K 6/547

(54) **Elektromechanisches Getriebe**
Electromechanical gearing
Transmission électro-mécanique

(30) Priorität: 12.07.2001 DE 10133919
(43) Veröffentlichungstag der Anmeldung: 15.01.2003
(73) Patentinhaber: Bayerische Motoren Werke Aktiengesellschaft, 80809 München (DE)
(72) Erfinder: Doepke, Hubertus, 82279 Eching (DE)

(56) Entgegenhaltungen:
- DE-A1- 19 903 936

## Beschreibung

Die Erfindung betrifft ein elektromechanisches Getriebe für Kraftfahrzeuge.

Zur Steigerung des Fahrkomforts sind Automatikgetriebe bekannt, bei denen der Wechsel der Gangstufen ohne Zutun des Fahrers automatisch erfolgt. Nachteile solcher Automatikgetriebe bestehen in hohen Herstellungskosten, Gewicht und Bauvolumen. Als kostengünstige Variante zu den derzeit üblichen Automatikgetrieben für Kraftfahrzeuge sind sogenannte automatisierte Schaltgetriebe bekannt geworden. Diese haben allerdings den Nachteil, daß während dem Schaltvorgang eine Unterbrechung der Zugkraft auftritt. Als Alternative ohne Zugkraftunterbrechung sind Doppelkupplungsgetriebe mit zwei getrennten Vorgelegewellen in Entwicklung. Nachteil hierbei sind die hohe mechanische und thermische Belastung der Kupplungen sowie eine aufwendige Steuerung für einen ruckfreien Schaltvorgang.

Der Erfindung liegt die Aufgabe zugrunde, ein Getriebe für Kraftfahrzeuge zu schaffen, das einen automatischen Schaltvorgang ohne Unterbrechung der Zugkraft ermöglicht sowie zusätzlich ein breites Spektrum von unterschiedlichen Schaltstrategien ermöglicht.
Den Stand der Technik nach dem Oberbegrift des Anspruchs 1 stellt hier die DE 199 03 936 dar.

Ein diesen Anforderungen entsprechendes elektromechanisches Getriebe ist im Patentanspruch 1 gekennzeichnet.

Bei dem erfindungsgemäßen elektromechanischen Getriebe ist eine gesteuerte Kupplung zwischen dem Verbrennungsmotor und dem Schaltgetriebe entbehrlich, und ein Schaltvorgang kann ohne Zugkraftunterbrechung durchgeführt werden. Die Eingangswelle eines Planetengetriebes ist mit der Kurbelwelle eines Verbrennungsmotors verbunden. Die beiden Ausgangswellen des Planetengetriebes sind sowohl mit zwei Vorgelegewellen eines Schaltgetriebes als auch mit zwei Rotoren eines Elektroantriebs verbunden, die als Motor und als Generator arbeiten können. Die beiden Rotoren können somit die Funktion eines herkömmlichen Anlassers und einer Lichtmaschine übernehmen, und sie ermöglichen die Steuerung der Schaltvorgänge des angeschlossenen Schaltgetriebeteils. Das erfindungsgemäße elektromechanische Getriebe zeichnet sich durch ein geringes Gewicht und eine geringe Baugröße aus.

Zweckmäßige Weiterbildungen der Erfindung ergeben sich aus den Unteransprüchen.

Einige bevorzugte Ausführungsbeispiele der Erfindung sind in den Zeichnungen dargestellt und werden nachfolgend näher erläutert.
Fig. 1a ist eine schematische Gesamtansicht eines mit einem Verbrennungsmotor gekuppelten elektromechanischen Getriebes,
Fig. 1b ist eine Darstellung ähnlich wie Fig. 1a, die aber eine Abwandlung mit einer Kupplung zeigt,
Fig. 2 ist eine schematische Darstellung von zwei Ausführungsformen eines zwischen dem Verbrennungsmotor und einem Schaltgetriebe angeordneten Planetengetriebes,

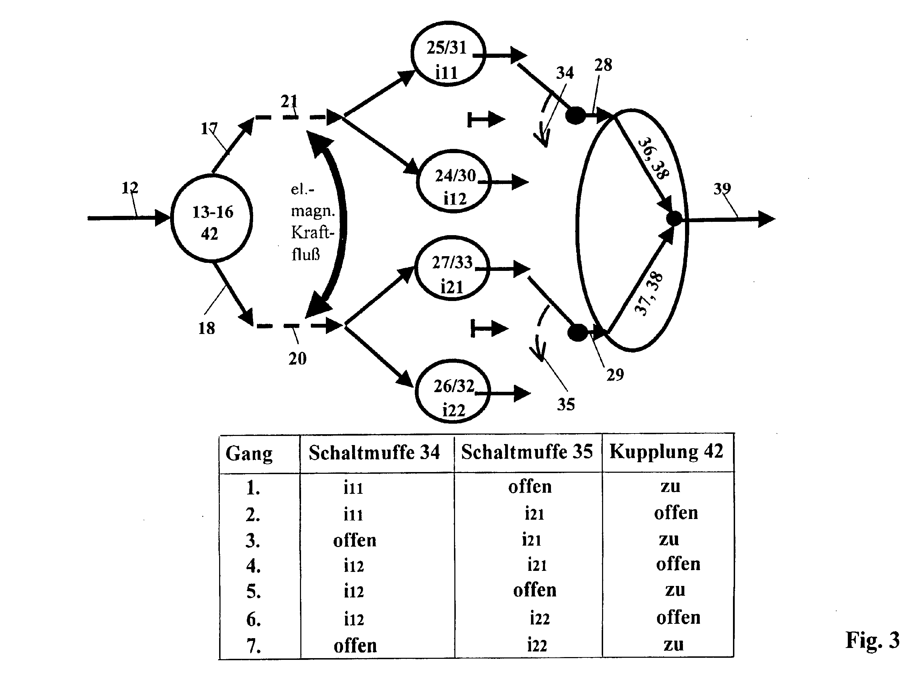

Fig. 3 ist ein Funktionsschaltbild des elektromechanischen Getriebes mit den möglichen Gängen nach Fig. 1b,
Fig. 4 ist ein Drehzahlnomogramm der Wellen des Planetengetriebes, das den Schaltvorgang in den nächst höheren Gang veranschaulicht,
Fig. 5 ist eine Darstellung ähnlich wie Fig. 4, die den Startvorgang des Motors veranschaulicht, und
Fig. 6 ist eine Darstellung ähnlich wie Fig. 4, die den Anfahrvorgang des Kraftfahrzeugs veranschaulicht.

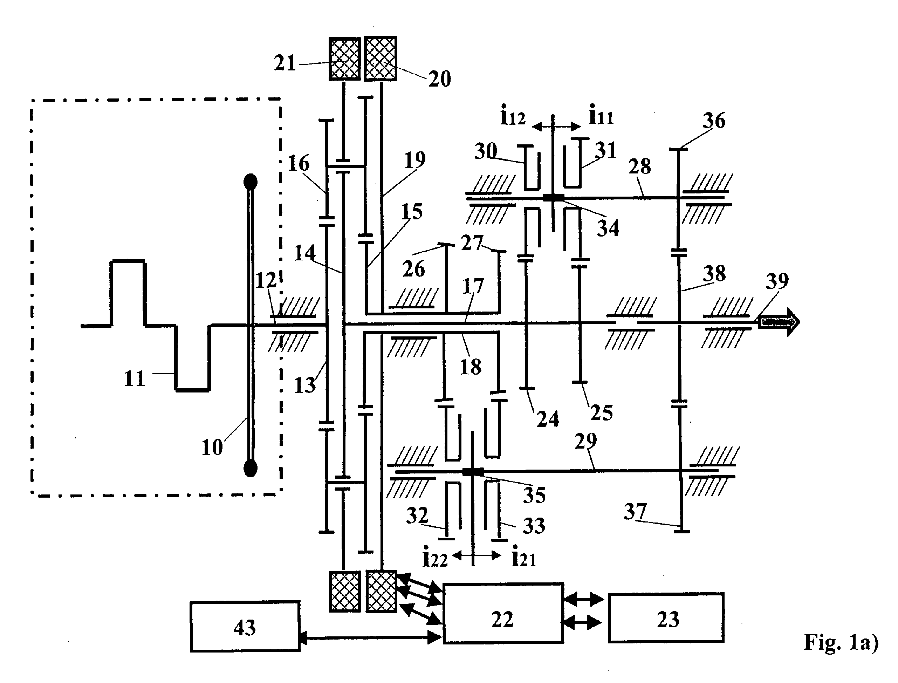

Die mit einem Schwungrad 10 versehene Kurbelwelle 11 eines mit einer unterbrochenen Umrißlinie angedeuteten Verbrennungsmotors ist mit der Eingangswelle 12 eines Planetengetriebes verbunden. Das Planetengetriebe umfaßt ein mit der Eingangswelle 12 verbundenes erstes Zentralrad 13, einen Steg 14 und eine zweites Zentralrad 15. Die Planetenräder 16 sind als Stufenräder ausgebildet, die mit dem ersten und dem zweiten Zentralrad 13 und 15 kämmen. Eine erste Ausgangswelle 17 des Planetengetriebes ist mit dem Steg 14 verbunden, und eine als Hohlwelle ausgebildete zweite Ausgangswelle 18 ist mit dem zweiten Zentralrad 15 verbunden. Auf der zweiten Ausgangswelle 18 ist der Träger 19 eines Rotors 20 befestigt. Am Steg 14 ist ein zweiter Rotor 21 befestigt. Diese beiden Rotoren sind sinngemäß so zueinander angeordnet, daß sie gemeinsam einen Elektroantrieb bilden, wobei der eine der beiden Rotoren eine Energieversorgung zur Erzeugung des elektrischen Arbeitsfeldes aufweist. Während es sich bei dem Rotor 20 des gezeigten Ausführungsbeispiels um einen als Schleifringläufer ausgebildeten Feldrotor handelt, handelt es sich bei dem Rotor 21 um einen Permanentmagneten oder Kurzschlußläufer. Die Anordnung könnte bei gleicher Funktion auch vertauscht sein, d. h. der Rotor 21 bildet den Feldrotor und der Rotor 20 bildet den Kurzschlußläufer. Bei dem in Fig. 1a gezeigten Ausführungsbeispiel ist dem Rotor 20 eine Leistungssteuerung 22 zugeordnet, bei der es sich um eine sogenannte Vier-Quadranten-Steuerung handelt. Dem Rotor 20 ist ferner ein Speicher 23 zugeordnet, der elektrische Energie an den Rotor 20 abgeben bzw. in dem Rotor 20 erzeugte elektrische Energie speichern kann. Der Vier-Quadranten-Leistungssteuerung 22 ist ein Getriebesteuergerät 43 zugeordnet.

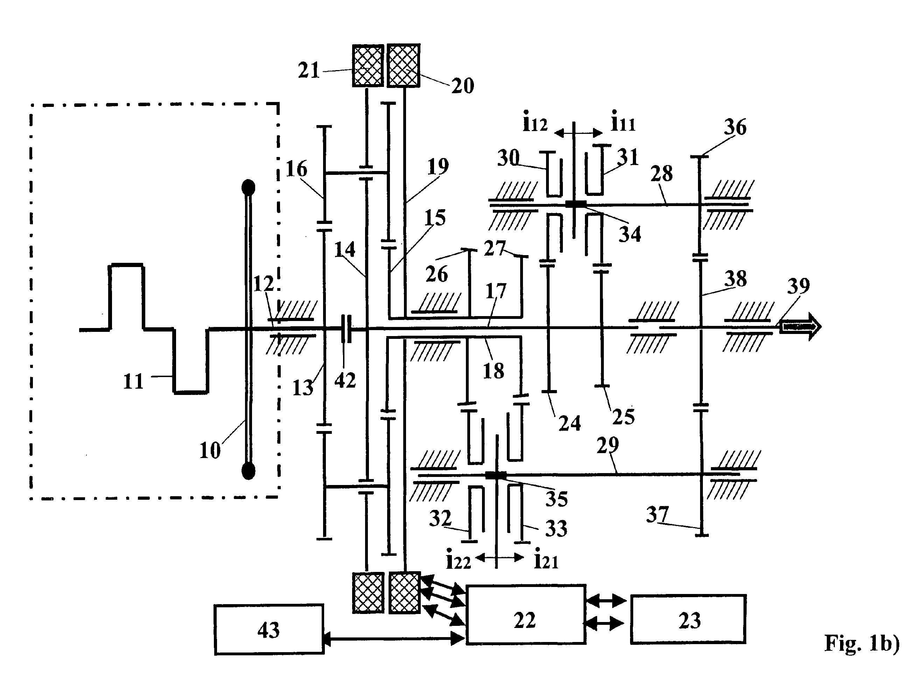

Das gezeigte Planetengetriebe stellt ein Teilergetriebe dar, das eine Leistungsverzweigung auf zwei Ausgangswellen 17 und 18 bewirkt. Auf der ersten Ausgangswelle 17 und auf der zweiten Ausgangswelle 18 sind jeweils zwei Zahnräder 24 und 25 bzw. 26 und 27 drehfest angeordnet. Zu den beiden koaxialen Ausgangswellen 17, 18 sind zwei Getriebewellen 28 und 29 parallel angeordnet. Auf den beiden Getriebewellen 28, 29 sind jeweils zwei Zahnräder 30, 31 bzw. 32, 33 drehbar gelagert. Auf jeder der beiden Getriebewellen 28, 29 ist ferner eine Schaltmuffe 34, 35 axial verschiebbar gelagert, um eines der beiden Zahnräder mit der betreffenden Getriebewelle drehfest zu verbinden. Auf den beiden Getriebewellen 28 und 29 ist ferner ein Zahnrad 36 bzw. 37 drehfest angeordnet. Die beiden Zahnräder 36 und 37 kämmen mit einem Zahnrad 38, das mit einer Abtriebswelle 39 drehfest verbunden ist. Die über das Planetengetriebe auf die beiden Ausgangswellen 17, 18 aufgeteilte Antriebsleistung des Verbrennungsmotors wird über die Zahnradpaarungen 36, 38 und 37, 38 auf die Abtriebswelle 39 summiert. Die auf den beiden Ausgangswellen 17, 18 und den beiden Getriebewellen 28, 29 angeordneten Zahnräder bilden vier unterschiedliche Zahnradpaarungen, die in Verbindung mit der Kupplung 42 des in Fig. 1b gezeigten Ausführungsbeispiels bis zu sieben unterschiedliche Getriebestufen ermöglichen.

Zum Schalten wird die gewünschte Zahnradpaarung durch ein von einem Getriebesteuergerät 43 bewirktes Verschieben der Schaltmuffe 34 oder 35 mit der betreffenden Getriebewelle 28 bzw. 29 gekuppelt. Das Getriebesteuergerät 43 verarbeitet die Drehzahlen der Kurbelwelle 11 und der Getriebeausgangswelle 39, die aktuelle Last des Verbrennungsmotors, die aktuelle Ladebilanz des Speichers 23 und die vom Fahrer gewählten Getriebeprogramme als Eingangsinformation. Das Getriebesteuergerät 43 errechnet die erforderliche Synchronisationsdrehzahl während des Schaltvorgangs und steuert den Betriebsmodus der Vier-Quadranten-Leistungssteuerung 22, die Funktion der Schaltmuffen 34 und 35, der Kupplung 42 sowie die Informationen für die erforderliche Betriebslast des Verbrennungsmotors. Bei dem gezeigten Ausführungsbeispiel sind lediglich vier Zahnradpaarungen vorgesehen, für den Fachmann ist aber erkennbar, daß ein solches Getriebe auch auf mehr oder weniger Zahnradpaarungen ausgelegt sein kann. Die Zahnradpaarung für den Rückwärtsgang wurde der Einfachheit halber weggelassen.

Bei dem in Fig. 1a gezeigten Ausführungsbeispiel sind im Fahrbetrieb beide Ausgangswellen 17, 18 über zwei unterschiedliche Zahnradpaarungen mit den Getriebewellen 28 und 29 gekuppelt. Am Getriebeeingang wird die Leistung des Verbrennungsmotors über das Planetengetriebe auf die Zahnradpaarungen der Getriebewellen 28, 29 verzweigt und am Getriebeausgang über die Zahnradpaarung 36, 38 und 37, 38 auf die Abtriebswelle 39 wieder summiert. Durch die unterschiedlichen Übersetzungen der beiden Zahnradpaarungen des Schaltgetriebes entstehen an den Ausgangswellen 17, 18 des Planetengetriebes und damit an dem Steg 14 und der Scheibe 19 unterschiedliche Drehzahlen, so daß die Rotoren 20, 21 als Generator genutzt werden können, um in der Art einer Lichtmaschine elektrische Leistung zu erzeugen.

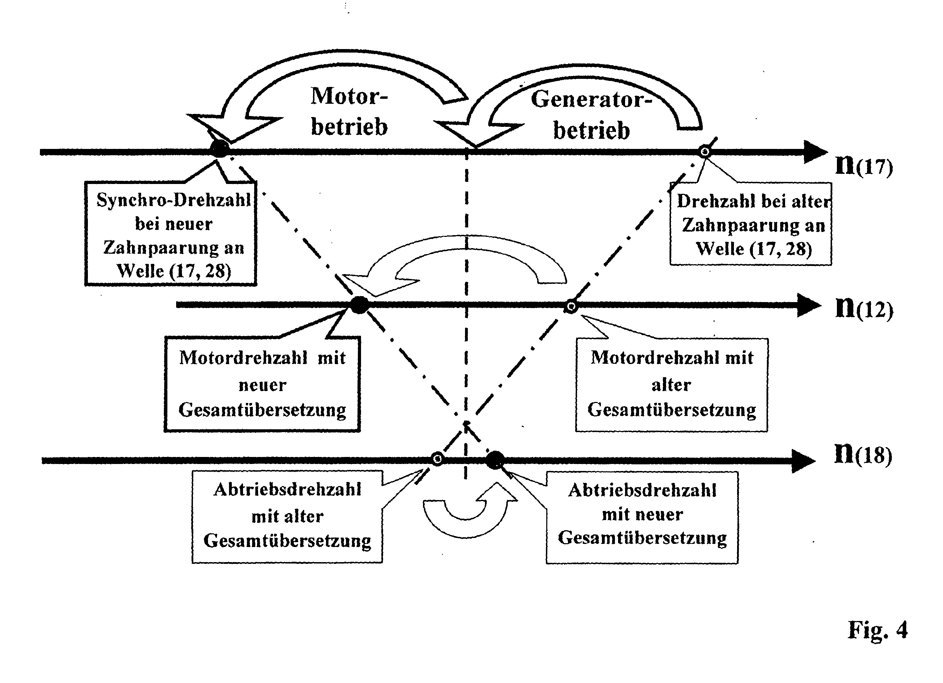

Fig. 4 ist ein Drehzahlnomogramm der Wellen 12, 17 und 18 des Planetengetriebes, das den Schaltvorgang in den nächst höheren Gang veranschaulicht. Zum Schalten wird das Moment einer der beiden Ausgangswellen 17, 18 des Planetengetriebes durch den von den zwei Rotoren 20, 21 gebildeten Elektroantrieb derart gestützt, daß die in Eingriff befindliche Zahnrpaarung an einer Welle, beispielsweise der ersten Ausgangswelle 17 kraftfrei wird und der Gang durch Ausrücken der Schaltmuffe 34 gelöst werden kann. Der Elektroantrieb 20, 21 bremst die Drehzahl der jetzt freien Ausgangswelle 17 auf die Synchronsolldrehzahl der nächst höheren Zahnradpaarung der Getriebewelle 28 herunter, so daß diese mit der Schaltmuffe 34 in Kraftschluß gebracht werden kann. Während dieses Vorgangs kann es, abhängig vom Lastzustand des Verbrennungsmotors, erforderlich sein, daß der Elektroantrieb 20, 21 zunächst im Generatorbetrieb und anschließend im Motorbetrieb arbeitet oder umgekehrt. Die Schaltschritte beim Hochschalten der einzelnen Gänge werden abwechselnd an den Getriebewellen 28-29-28-29 durchgeführt. Für den Fachmann ist erkennbar, daß die vorstehend beschriebenen Vorgänge sinngemäß auch für das Schalten in den nächst niedrigeren Gang zutreffen.

Ein wesentlicher Vorteil dieses elektromechanischen Getriebes besteht darin, daß die Relativdrehzahl der Rotoren 20, 21 des Elektroantriebs, weil von der Drehzahl des Verbrennungsmotors unabhängig, immer nur der Spreizung zwischen dem gegenwärtigen und dem nächsten Gang entspricht. Damit bleibt die für die Synchronisation während des Schaltvorgangs erforderliche Leistung des Elektroantriebs gering. Bei einem Schaltvorgang unter Vollast ist die Leistung dem Produkt aus dem halben Drehmoment des Verbrennungsmotors und der Drehzahlspreizung zwischen bisheriger und neuer Übersetzung proportional.

Weitere Vorteile sind, daß der Elektroantrieb während eines Schaltvorgangs zu annähernd gleichen Teilen im Generatormodus und im Motormodus arbeitet und somit die erzeugte elektrische Energie nach kurzfristiger Zwischenspeicherung anschließend wieder im Motorbetrieb zurückführt. Der Speicher 23, z. B. eine Kondensatorbatterie, kommt daher mit geringer Kapazität aus. Bei dem vorstehend beschriebenen elektromechanischen Getriebe läßt sich die Synchronisation über das Getriebesteuergerät 43 auf Fahrerbefehl oder automatisch in unterschiedlichen Schaltcharakteristiken, beispielsweise "komfortbetont" oder "sportlich" steuern, und sie ist abgesehen von den Verlusten in der elektrischen Leistungsübertragung und der Zwischenspeicherung verlustfrei. Damit erfüllt dieses elektromechanische Getriebe alle Funktionen eines herkömmlichen Stufenautomatikgetriebes mit hydraulischem Wandler, jedoch ohne dessen Verluste und deshalb mit deutlich besserem Gesamtwirkungsgrad.

Der Schaltvorgang ohne Unterbrechung der Zugkraft stellt einen hybriden Betriebszustand dar, der je nach Anspruch an den Schaltkomfort unterschiedlich lang andauern kann. Bei geeigneter Auslegung des Getriebesteuergeräts 43 und des Speichers 23 kann dieser Zustand in jeder Gangstufe bewußt als hybrider Dauerbetrieb von Verbrennungsmotor und Elektroantrieb angefahren werden, wobei der Elektroantrieb sowohl im Generator- als auch im Motormodus betrieben werden kann.

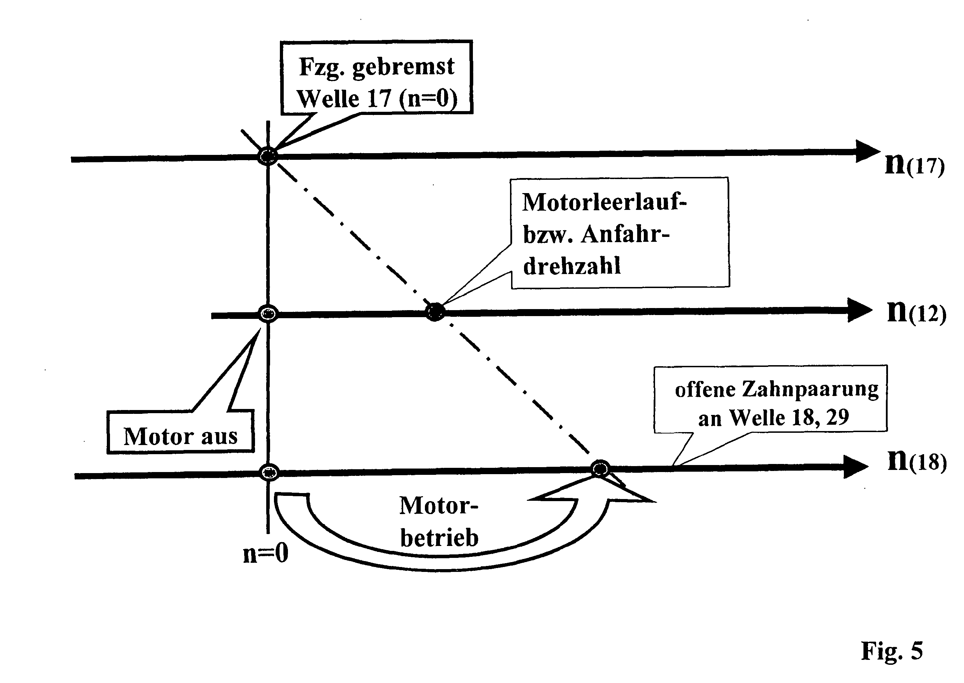

Der Startvorgang des Motors ist in Fig. 5 dargestellt. Der Motorstart erfolgt bei gebremstem Fahrzeug mit eingelegtem niedrigsten Gang, wobei sich nur eine der beiden Getriebewellen 28, 29 in Eingriff befindet (gemäß Fig. 5 die Getriebewelle 28). Der von den beiden Rotoren 20, 21 gebildete Elektroantrieb hat dabei die Funktion eines Anlassers, indem er den Verbrennungsmotor auf Leerlaufdrehzahl zieht. Anschließend steht das Fahrzeug gebremst im Motorleerlauf, und der Elektroantrieb kann als Generator genutzt werden.

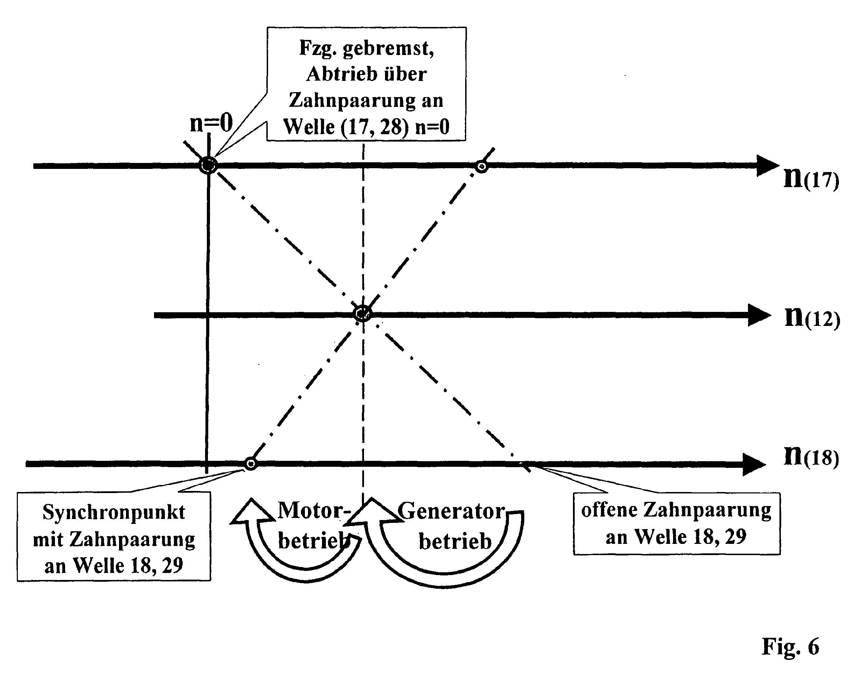

Der Anfahrvorgang ist in Fig. 6 dargestellt. Ausgehend vom Motor-Leerlauf bei gebremstem Fahrzeug mit eingelegtem niedrigsten Gang entspricht der Anfahrvorgang nach Lösen der Fahrzeugbremse einem Schaltvorgang in den nächst höheren Gang. Auch hier arbeitet der Elektroantrieb zunächst im Generator- und anschließend im Motorbetrieb, bis die Synchrondrehzahl der Zahnpaarung, beispielsweise 26/32 der nicht in Eingriff stehenden Getriebewelle, beispielsweise 29 erreicht wird. Diese Getriebewelle wird sodann mit der zugeordneten Schaltmuffe mit der entsprechenden Zahnpaarung in Eingriff gebracht. Der Anfahrvorgang unter Vollast ist nahezu verlustfrei.

In Fig. 1b ist eine Abwandlung der in den Fig. 1a gezeigten Ausführungsform des Planetengetriebes dargestellt. Diese Abwandlung besteht in einer Kupplung 42, die es ermöglicht, daß das Planetengetriebe verblockt und unwirksam gemacht wird. Die Kupplung 42 ist vorzugsweise zwischen dem Zentralrad 13 und dem Steg 14 angeordnet. Sie ist insbesondere dann von Vorteil, wenn die Forderung eines Schaltvorgangs ohne Unterbrechung der Zugkraft nicht besteht. Dann wird die Auslegung des von den Rotoren 20, 21 gebildeten Elektroantriebs hinsichtlich Anlaufmoment und Momentenkennlinie sowie dessen Leistungssteuerung 22 und des Speichers 23 durch das beim Anlaßvorgang des Verbrennungsmotors erforderliche Drehmoment bestimmt. Die Kupplung 42 bewirkt ein Verblocken des Planetengetriebes und stellt eine Anfahrhilfe für Anfahrvorgänge unter Vollast dar, indem sie unterstützend zum Generatorbremsmoment des Elektroantriebs wirkt. Des weiteren werden mit geschlossener Kupplung 42 Übersetzungen möglich, in denen nur eine Gangstufe entweder über die Getriebewelle 28 oder über die Getriebewelle 29 in Eingriff steht.

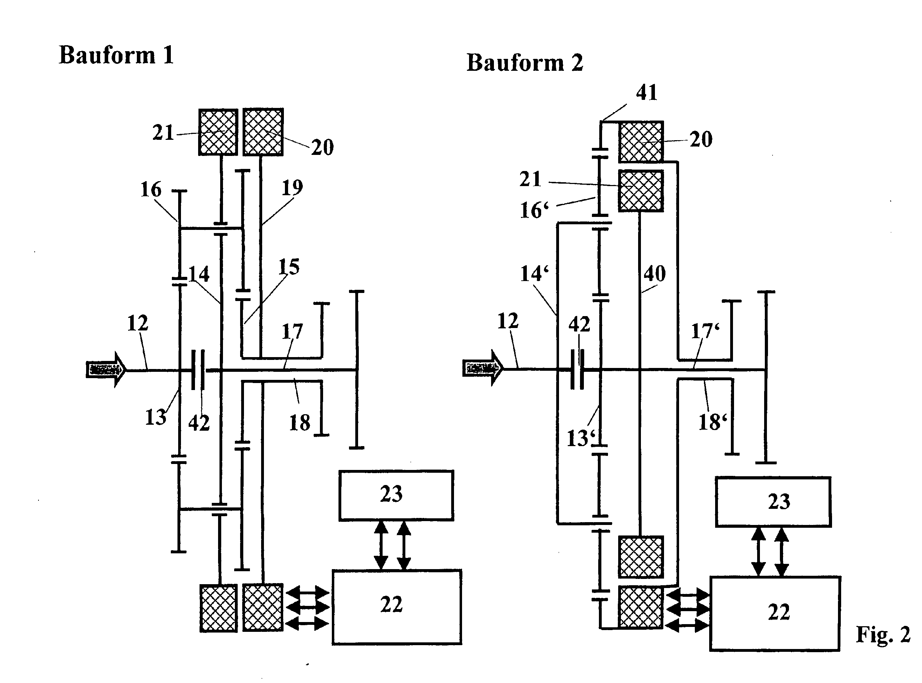

Das in der linken Bildhälfte von Fig. 2 dargestellte Planetengetriebe mit positiver Standübersetzung entspricht der Ausführungsform nach Fig. 1b. In der rechten Bildhälfte von Fig. 2 ist eine Bauform eines Planetengetriebe mit negativer Standübersetzung dargestellt, bei dem sowohl Funktion und Wirkung mit dem in der linken Bildhälfte von Fig. 2 dargestellten Planetengetriebe identisch sind. Bei dieser Ausführungsform ist die Eingangswelle 12 mit dem Steg 14' des Planetengetriebes verbunden. Die im Steg 14' gelagerten Planetenräder 16' kämmen mit einem Zentralrad 13' und einem Hohlrad 41. Das Zentralrad 13' ist mit einer ersten Ausgangswelle 17' verbunden, und das Hohlrad 41 ist mit einer als Hohlwelle ausgebildeten zweiten Ausgangswelle 18' verbunden. Auf der ersten Ausgangswelle 17' ist ein scheibenartiger Träger 40 befestigt, der einen als Kurzschlußläufer ausgebildeten Rotor 21 des Elektroantriebs trägt. Der zu dem Rotor 21 konzentrisch angeordnete als Schleifringläufer ausgebildete Rotor 20 des Elektroantriebs ist am Hohlrad 41 befestigt. Dem von den beiden Rotoren 20 und 21 gebildeten Elektroantrieb ist eine Vier-Quadranten-Leistungsungssteuerung 22 und ein Speicher 23 zugeordnet. Die beiden Ausgangswellen 17' und 18' entsprechen analog zu der in Fig. 1 gezeigten Ausführungsform den Ausgangswellen 17 und 18.

### Bezugszeichenliste:

- 10: Schwungrad
- 11: Kurbelwelle
- 12: Eingangswelle
- 13: erstes Zentralrad
- 14: Steg
- 15: zweites Zentralrad
- 16: Planetenräder
- 17: erste Ausgangswelle
- 18: zweite Ausgangswelle
- 19: Träger
- 20: Rotor (Schleifringläufer)
- 21: Rotor (Kurzschlußläufer)
- 22: Leistungssteuerung
- 23: Speicher
- 24-27: Zahnräder
- 28, 29: Getriebewellen
- 30-33: Zahnräder
- 34, 35: Schaltmuffen
- 36-38: Zahnräder
- 40: Träger
- 41: Hohlrad
- 42: Kupplung
- 43: Getriebesteuergerät

## Patentansprüche

1. Elektromechanisches Getriebe für Kraftfahrzeuge mit folgenden Merkmalen:
a) Die Eingangswelle (12) eines Planetengetriebes (13-16) ist mit der Kurbelwelle (11) eines Verbrennungsmotors gekuppelt,
b) die Eingangswelle (12) und eine der beiden Ausgangswellen (17, 18) des Planetengetriebes (13-16) oder beide Ausgangswellen stehen mit zwei vom Getriebegehäuse unabhängigen Rotoren (20, 21) eines Elektroantriebs in direkter Verbindung, wobei der eine der beiden Rotoren (20) eine Energieversorgung zur Erzeugung des elektrischen Arbeitsfeldes aufweist.
c) dem besagten Rotor (20) ist eine Vier-Quradranten-Leistungssteuerung (22) zur Steuerung des erzeugten elektromagnetischen Feldes zugeordnet,
d) dem besagten Rotor (20) ist ein Speicher (23) zum Speichern der im Generatorbetrieb erzeugten elektrischen Energie zugeordnet,
e) der Vier-Quadranten-Leistungssteuerung (22) ist ein Getriebesteuergerät (43) zugeordnet,
f) den beiden Ausgangswellen (17, 18) des Planetengetriebes (13-16) sind zwei Getriebewellen (28, 29) eines Schaltgetriebes zugeordnet, wobei mehrere Zahnradpaarungen (26/32, 27/33, 24/30, 25/31) gleichzeitig in Eingriff stehen, von denen ein Zahnrad mit der zugehörigen Welle drehfest verbunden und das andere Zahnrad auf der zugehörigen Welle drehbar gelagert ist,
g) Schaltmittel (34, 35) zum drehfesten Verbinden eines ausgewählten Zahnrades mit der zugehörigen Welle, und
h) eine Abtriebswelle (39), die mit den beiden Getriebewellen (28, 29) über eine Stirnradstufe (36-38) gekuppelt ist.

2. Getriebe nach Anspruch 1, **dadurch gekennzeichnet, daß** die Planetenräder (16) des Planetengetriebes als Stufenräder ausgebildet sind, die mit einem mit der Eingangswelle (12) gekuppelten ersten Zentralrad (13) und mit einem mit einer der Ausgangswellen (18) des Planetengetriebes gekuppelten zweiten Zentralrad (15) kämmen, und daß der Steg (14) des Planetengetriebes mit der anderen Ausgangswelle (17) gekuppelt ist.

3. Getriebe nach Anspruch 1, **dadurch gekennzeichnet**, der Steg (14') des Planetengetriebes mit der Eingangswelle (12) gekuppelt ist, daß ein Zentralrad (13') des Planetengetriebes mit einer der Ausgangswellen (17') und ein Hohlrad (41) des Planetengetriebes mit der anderen Ausgangswelle (18') gekuppelt ist.

4. Getriebe nach Anspruch 2 oder 3, **gekennzeichnet durch** eine Kupplung (42) zum Verblocken des Planetengetriebes (13-16; 13', 14',16', 41).

5. Getriebe nach einem der vorhergehenden Ansprüche, **dadurch gekennzeichnet, daß** jeder der beiden Rotoren (20, 21) über einen scheibenförmigen Träger (19, 40) mit einer der beiden Ausgangswellen (17, 17',18, 18') des Planetengetriebes drehfest verbunden ist.

## Claims

1. An electromagnetic gear unit for motor vehicles and having the following features:
a) the input shaft (12) of an epicyclic gear (13-16) is connected to the crankshaft (11) of an internal combustion engine,
b) the input shaft (12) and one of the two output shafts (17, 18) of the epicyclic gear (13-16) or both output shafts thereof are directly connected to two rotors (20, 21) of an electric drive independent of the gearbox, wherein one of the two rotors (20) has an energy supply for generating the electric field of action,
c) the rotor (20) is associated with a four-quadrant power control (22) for controlling the generated electromagnetic field,
d) the rotor (20) is associated with a storage unit (23) for storing the electric energy produced during generator operation,
e) the four-quadrant power control (22) is associated with a gear control unit (43),
f) the two output shafts (17, 18) of the epicyclic gear (13-16) are associated with two shafts (28, 29) of a change-speed gear, wherein a number of pairs of gearwheels (26/32, 27/33, 24/30, 25/31) are simultaneously in engagement, one gearwheel thereof being co-rotatably connected to the associated shaft and the other gearwheel being mounted for rotation on the said shaft,
g) switching means (34, 35) for co-rotatably connecting a selected gearwheel to the associated shaft, and
h) a driven shaft (39) coupled to the two gear shafts (28, 29) via a spur gear stage (36-38).

2. A gear unit according to claim 1, **characterised in that** the planet wheels (16) of the epicyclic gear unit are step wheels which mesh with a first central wheel (13) coupled to the input shaft (12) of the epicyclic gear and with a second central wheel coupled to one of the output shafts (18) thereof, and the web (14) of the epicyclic gear is coupled to the other output shaft (17).

3. A gear unit according to claim 1, **characterised in that** the web (14') of the epicyclic gear is coupled to the input shaft (12), a central wheel (1 3') of the epicyclic gear is connected to one of the output shafts (17') and a crown wheel (41) of the epicyclic gear is connected to the other output shaft (18').

4. A gear unit according to claim 2 or 3, **characterised by** a clutch (42) for locking the epicyclic gear (13-16; 13', 14', 16', 41).

5. A gear unit according to any of the preceding claims, **characterised in that** each of the two rotors (20, 21), via a disc-shaped carrier (19, 40) is co-rotatably connected to one of the two output shafts (17, 17', 18, 18') of the epicyclic gear.

## Revendications

1. Transmission électromécanique de véhicule automobile ayant les caractéristiques suivantes :
a) l'arbre d'entrée (12) d'une transmission planétaire (13-16) est couplé au vilebrequin (11) d'un moteur à combustion interne,
b) l'arbre d'entrée (12) et l'un des deux arbres de sortie (17, 18) de la transmission planétaire (13-16) ou les deux arbres de sortie, sont en liaison directe avec deux rotors (20, 21) indépendants, du boîtier de transmission et appartenant à un moteur électrique, l'un des deux rotors (20) ayant une alimentation électrique générant le champ électrique actif,
c) le rotor (20) est combiné à une commande de puissance dans quatre cadrans (22) pour commander le champ électromagnétique généré,
d) le rotor (20) comporte un accumulateur (23) pour stocker l'énergie électrique générée par le fonctionnement du générateur,
e) la commande de puissance dans quatre cadrans (22) est combinée à un appareil de commande de transmission (43),
f) deux arbres de transmission (28, 29) d'une boîte de vitesses sont associés aux deux arbres de sortie (17, 18) de la transmission planétaire (13-16), plusieurs paires de pignons (26/32, 27/33, 24/30, 25/31) étant simultanément en prise et parmi celles-ci, un pignon est relié solidairement en rotation à l'arbre correspondant et l'autre pignon est monté à rotation sur l'arbre correspondant,
g) des moyens de commutation (34, 35) pour relier solidairement en rotation un pignon sélectionné à l'arbre correspondant, et
h) un arbre de sortie (39) couplé aux deux arbres de transmission (28, 29) par l'intermédiaire d'un étage à pignon droit (36, 38).

2. Transmission selon la revendication 1,
**caractérisée en ce que**
les roues planétaires (16) de la transmission planétaire sont réalisées sous la forme de pignons étagés en prise avec un premier pignon central (13) couplé à l'arbre d'entrée (12) et avec un second pignon central (15) couplé à l'un des arbres de sortie (18) de la transmission planétaire, et l'entretoise (14) de la transmission planétaire est couplée aux autres arbres de sortie (17).

3. Transmission selon la revendication 1,
**caractérisée en ce que**
l'entretoise (14') de la transmission planétaire est couplée à l'arbre d'entrée (12),
un pignon central (13') de la transmission planétaire est couplé à l'un des arbres de sortie (17') et une roue creuse (41) de la transmission planétaire est couplée à l'autre arbre de sortie (18').

4. Transmission selon la revendication 2 ou 3,
**caractérisée par**
un embrayage (42) pour bloquer la transmission planétaire (13-16, 13', 14', 16', 41).

5. Transmission selon les revendications précédentes,
**caractérisée en ce que**
chacun des deux rotors (20, 21) est relié par l'intermédiaire d'un support (19, 40) en forme de disque à l'un des deux arbres de sortie (17, 17', 18, 18') de la transmission planétaire par une liaison solidaire en rotation.
